(19) Europäisches Patentamt / European Patent Office / Office européen des brevets

(11) **EP 3 580 271 B1**

(12) **EUROPEAN PATENT SPECIFICATION**

(45) Date of publication and mention of the grant of the patent:
**06.05.2026 Bulletin 2026/19**

(21) Application number: **17772318.6**

(22) Date of filing: **06.09.2017**

(51) International Patent Classification (IPC):
***C08K 5/52*** *(2006.01)* ***C08K 5/5313*** *(2006.01)*
***C08K 3/22*** *(2006.01)* ***C08K 3/38*** *(2006.01)*
***C08K 3/32*** *(2006.01)* ***C08K 3/00*** *(2018.01)*
***C08K 7/14*** *(2006.01)*

(52) Cooperative Patent Classification (CPC):
(C-Sets available)
**C08K 3/22; C08K 3/32; C08K 3/38; C08K 5/5205; C08K 5/5313;** C08K 3/013; C08K 5/3492; C08K 5/52; C08K 7/14; C08K 2003/2296; C08K 2003/322; C08K 2003/323; C08K 2003/387
(Cont.)

(86) International application number:
**PCT/EP2017/072278**

(87) International publication number:
**WO 2018/050497 (22.03.2018 Gazette 2018/12)**

(54) **FLAME RETARDANT-STABILIZER COMBINATION FOR THERMOPLASTIC POLYMERS**

FLAMMSCHUTZMITTEL- STABILISATOR-KOMBINATION FÜR THERMOPLASTISCHE POLYMERE

COMBINAISON DE STABILISATEURS IGNIFUGEANTS POUR DES POLYMÈRES THERMOPLASTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2016 DE 102016217576**

(43) Date of publication of application:
**18.12.2019 Bulletin 2019/51**

(73) Proprietor: **Clariant International Ltd**
**4132 Muttenz (CH)**

(72) Inventors:
- **BAUER, Harald**
  **50170 Kerpen (DE)**
- **HÖROLD, Sebastian**
  **86420 Diedorf (DE)**
- **SICKEN, Martin**
  **51149 Köln (DE)**

(74) Representative: **Zusammenschluss Clariant et al**
**Patent Management**
**Industriepark Höchst, G 860**
**65926 Frankfurt am Main (DE)**

(56) References cited:
**DE-A1- 102014 001 222** **US-A1- 2004 227 130**
**US-A1- 2006 084 734** **US-A1- 2006 089 435**
**US-A1- 2008 161 490** **US-A1- 2014 066 551**

- **DATABASE WPI Week 201501, Derwent World Patents Index; AN 2014-W56901, XP002774975**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/22, C08L 77/06;**
**C08K 3/32, C08L 77/06;**
**C08K 3/38, C08L 67/02;**
**C08K 3/38, C08L 77/02;**
**C08K 3/38, C08L 77/06;**
**C08K 5/5205, C08L 77/02;**
**C08K 5/5205, C08L 77/06;**
**C08K 5/5313, C08L 67/02;**
**C08K 5/5313, C08L 77/02;**
**C08K 5/5313, C08L 77/06;**
C08K 7/14, C08L 67/02;
C08K 7/14, C08L 77/06

## Description

The present invention relates to a flame retardant-stabilizer combination for thermoplastic polymers with good flowability and to flame retardant polymeric molding compositions which comprise such flame retardant-stabilizer combinations.

The present invention belongs to the technical field of flame retardants, and more particularly flame retardant-stabilizer combination having a good fluidity.

For thermoplastic polymers in particular, salts of phosphinic acids (phosphinates) have been found to be effective flame-retardant additives (DE-A-2 252 258 and DE-A-2 447 727).

Moreover, synergistic combinations have been found of phosphinates with certain nitrogen compounds and are more effective as flame retardants in a whole series of polymers than the phosphinates alone (PCT/EP97/01664 and also DE-A-197 34 437 and DE-A-197 37 727).

DE-A-196 14 424 describes phosphinates in combination with synergists in polyesters and polyamides. DE-A-199 33 901 describes phosphinates in combination with melamine polyphosphate as a flame retardant for polyesters and polyamides.

WO-A-2004022640 describes flame retardant combinations for thermoplastics, said flame retardant combinations, in addition to flame retardancy, exerting a stabilizing action on the plastic.

The shortcomings of the above described methods are that if flowability of dialkylphosphinic salt is poor, uneven distribution of the flame retardant polymeric molding compositions may occur which can have negative consequences on the flame retardant properties of the flame retardant polymeric molding compositions.

CN-A-104059101A describes the advantageous effect of adding process aids to the production of dialkylphosphinic acid salts on the flowability, namely the angle of repose. The shortcoming of this method is that the addition of process aids to the production can have wide spread negative consequences on other product properties, adds a lot of more complexity to the production process and can even contribute security hazards.

US 2006/089435 A1 discloses a flameproof agent-stabilizer-combination for thermoplastic polymers comprising phosphinic acid salt or diphosphinic acid salt as component A, optionally a nitrogen-containing synergist or a P/N-flame-retardant as component B and selected oxides, hydroxides or other compounds as component C. US 2006/084734 A1 discloses dialkylphospinic acid salts, their use and their manufacture. From US 2008/161490 A1 halogen-free flame retardants are known which can be used for manufacturing polyamide molding compositions with increased glow-wire resistance. US 2014/066551 A1 discloses glass-filled polyamide compositions and articles made therefrom. From US 2004/227130 A1 flame-retardant and stabilizer combinations for thermoplastic polymers are known. These documents do not disclose the use of a component, such as an oxide or hydroxide for making flame-retardants having an angle of repose with a decreased numeric value compared to the angle of repose of a flame retardant-stabilizer combination comprising no such component.

Surprisingly, it was found that addition of a small amount of additives can have advantageous effects on the flowability of the flame retardant without the need to change the whole production process. Furthermore the possibility to use the additive in different amounts offers great flexibility in choosing the desired flowability.

It is therefore an object of the present invention to provide flame retardant combinations for thermoplastics, said flame retardant combinations, in addition to flame retardancy, exerting high flowability. This object is achieved by the addition of basic or amphoteric metal oxides, metal hydroxides, carbonates, silicates, borates, stannates, mixed oxide hydroxides, oxide hydroxide carbonates, hydroxide silicates or hydroxide borates or mixtures of these substances, coupled with the use of phosphinates or their mixtures with synergists as flame retardants.

The obtained flame retardant-stabilizer combination of the present invention is prepared by adding a component C and has a high flowability, and the angle of repose is up to 5° - 45°, so that it can fundamentally solve the problems of poor flowability and uneven distribution of flame retardants in resins.

The invention therefore provides the use of a component C) defined below to prepare a flame retardant-stabilizer combination for thermoplastic polymers, said flame retardant-stabilizer combination comprising, as component A, from 25 to 99.9 % by weight of a phosphinic acid salt of the formula (I)

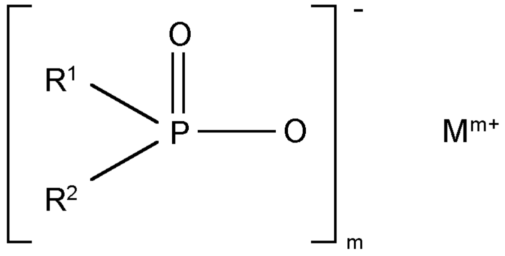

(I)

wherein

$R^1$, $R^2$ are the same or different and are each $C_1$-$C_{18}$-alkyl, linear or branched, $C_6$-$C_{18}$-aryl, $C_7$-$C_{18}$-arylalkyl or $C_7$-$C_{18}$-alkylaryl, or $R^1$ and $R^2$ form one or more rings with each other,

M is Mg, Ca, Al, Sb, Sn, Ge, Ti, Zn, Fe, Zr, Ce, Bi, Sr, Mn, Li, Na, K and/or a protonated nitrogen base;

m is from 1 to 4;

as component B, from 0 to 75 % by weight of a synergist or of a phosphorus/nitrogen flame retardant and,
from 0.1 to 50 % by weight of component C which is selected from the group of a metal oxide, a basic or amphoteric oxide, a metal hydroxide, a silicate, a zeolithe, a silicic acid, a glass-, glass-ceramic or ceramic-powder, magnesium carbonate, magnesium-calcium-carbonate (Dolomite), zinc stannate, zinc hydroxyl stannate, zinc phosphate, zinc sulfide, zinc borate or aluminium phosphate, preferably of magnesium oxide, zinc oxide, manganese oxide, tin oxide, dihydrotalcite, hydrocalumite, magnesium hydroxide, calcium hydroxide, zinc hydroxide, tin oxide hydrate, manganese hydroxide, zinc borate, basic zinc silicate, zinc stannate or mixtures of these substances, the sum of the component s always being 100 % by weight,
wherein the angle of repose of said flame retardant-stabilizer combination is between 5° and 45° as measured by continuously pouring a powder sample through a dropping down to a round plate with a radius of r, accumulating the powder into a cone-shaped pile growing up until the height of the pile did not increase, measuring the height of the pile, h and calculating the angle of repose, $\alpha$, was according to formula tg $\alpha$ = h/r, and
wherein the angle of repose of the flame retardant-stabilizer combination comprising component C) has a decreased numeric value compared to the angle of repose of a flame retardant-stabilizer combination comprising the same components A and B but without component C).

Preferable, the angle of repose of said flame retardant-stabilizer combination is between 20° and 40°.

$R^1$, $R^2$ are preferably the same or different and are each methyl, ethyl, n-propyl, isopropyl, n-butyl, tert-butyl, n-pentyl, 2-pentyl, 3-pentyl, 2-methylbutyl, 3-methylbutyl (iso-mentyl), 3-methylbut-2-yl, 2-methylbut-2-yl, 2,2-dimethylpropyl (neopentyl), hexyl, heptyl, octyl, nonyl, decyl, cyclopentyl, cyclopentylethyl, cyclohexyl, cyclohexylethyl, phenyl, phenylethyl, methylphenyl and/or methylphenylethyl.

M is preferably a calcium, aluminum, zinc, titanium or iron ion.

Component B preferably comprises one or more of groups a) - e), wherein these groups encompasses

a) condensation products of melamine;
b) reaction products of melamine with polyphosphoric acid and/or reaction products of condensation products of melamine with polyphosphoric acid or mixtures thereof;
c) phosphates of the formulae $(NH_4)_y H_{3-y} PO_4$ or $(NH_4 PO_3)_z$, where y is from 1 to 3 and z is from 1 to 10 000;
d) N-synergists of the formulae (III) to (VIII) or mixtures thereof.

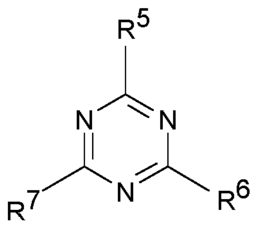
(III)

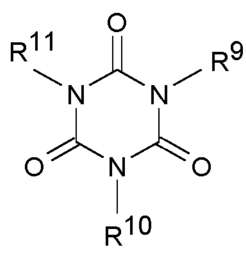
(IV)

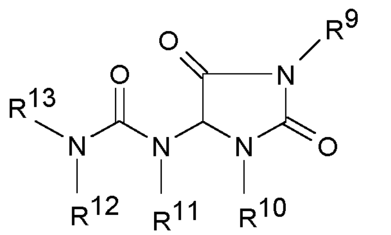
(V)

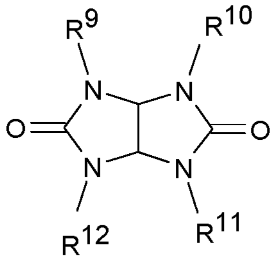

(VI)

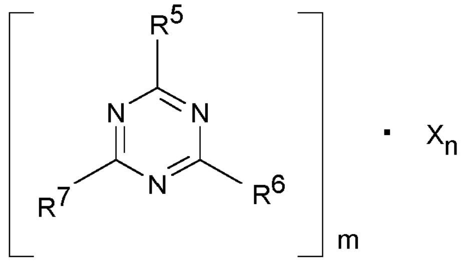

(VII)

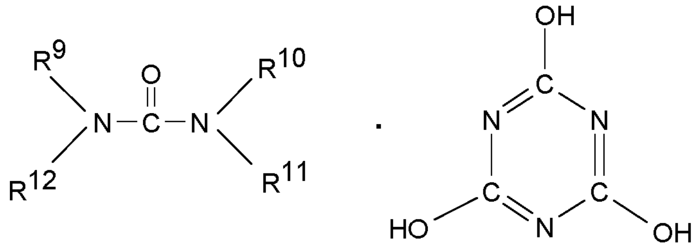

(VIII)

where

- $R^5$ to $R^7$ are each hydrogen, $C_1$-$C_8$-alkyl, $C_5$-$C_{16}$-cycloalkyl or -alkylcycloalkyl, possibly substituted by a hydroxyl or a $C_1$-$C_4$-hydroxyalkyl function, $C_2$-$C_8$-alkenyl, $C_1$-$C_8$-alkoxy, -acyl, -acyloxy, $C_6$-$C_{12}$-aryl or -arylalkyl, $-OR^8$ and $-N(R^8)R^9$, N-alicyclic or N-aromatic,
- $R^8$ is hydrogen, $C_1$-$C_8$-alkyl, $C_5$-$C_{16}$-cycloalkyl or -alkylcycloalkyl, possibly substituted by a hydroxyl or a $C_1$-$C_4$-hydroxyalkyl function, $C_2$-$C_8$-alkenyl, $C_1$-$C_8$-alkoxy, -acyl, -acyloxy or $C_6$-$C_{12}$-aryl or -arylalkyl,
- $R^9$ to $R^{13}$ are each the same groups as $R^8$ and also $-O-R^8$,
- m and n are each independently of 1, 2, 3 or 4,
- X is an acid which can form adducts with triazine compounds (III);

or oligomeric esters of tris(hydroxyethyl) isocyanurate with aromatic polycarboxylic acids;
e) aluminium phosphites.

Preferably the condensation products a) of melamine are melem, melam, melon and/or more highly condensed compounds thereof;

the reaction products of melamine b) are dimelamine pyrophosphate, melamine polyphosphate, melem polyphosphate, melam polyphosphate, melon polyphosphate and/or mixed polysalts of this type;
the phosphates c) are ammonium hydrogenphosphate, ammonium dihydrogenphosphate and/or ammonium polyphosphate;
the N-synergists d) are benzoguanamine, tris(hydroxyethyl) isocyanurate, allantoin, glycouril, melamine, melamine cyanurate, dicyandiamide and/or guanidine;
the aluminium phosphites e) are of the formula (IX), (II) and/or (X)

$$Al_2(HPO_3)_3 \times (H_2O)_q \qquad (IX)$$

where

q is 0 to 4

$$Al_{2,00}M_z(HPO_3)_y(OH)_v \times (H_2O)_w \qquad (II)$$

where

M are alkali metal ions

z 0,01 to 1,5
y 2,63 to 3,5
v 0 to 2 and
w 0 to 4,

$$Al_{2,00}(HPO_3)_u(H_2PO_3)_t \times (H_2O)_s \qquad (X)$$

where

u is 2 to 2,99
t 2 to 0,01 and
s 0 to 4

and/or mixtures of aluminium phosphite of formula (IX) with aluminium salt of limited solubility and nitrogen free ions, mixtures of aluminium phosphite of formula (X) with aluminium salts, aluminium phosphite [Al(H2PO$_3$)$_3$], secondary aluminium phosphite [$Al_2(HPO_3)_3$], basic aluminium phosphite [$Al(OH)(H_2PO_3)_2$*2aq], aluminium phosphite tetrahydrate [$Al_2(HPO_3)_3$*4aq], aluminium phosphonate, $Al_7(HPO_3)_9(OH)_6$(1,6-hexandiamine)$_{1,5}$*12$H_2O$, $Al_2(HPO_3)_3$*x-$Al_2O_3$*n$H_2O$ with x = 2,27 - 1, $Al_4H_6P_{16}O_{18}$ and/or mixtures of 0 - 99,9 wt.-% $Al_2(HPO_3)_3$*n$H_2O$ with 0,1 - 100 Gew.-% sodium aluminium phosphite.

Preferably the aluminium phosphite is a mixture of 50 - 99 wt.-% $Al_2(HPO_3)_3 \times (H_2O)_q$ where q is 0 to 4 with 1 - 50 wt.-% sodium aluminium phosphite.

More preferably the aluminium phosphite is a mixture of 50 - 99 wt.-% $Al_2(HPO_3)_3 \times (H_2O)_q$ where q is 0 to 4 with 1 - 50 wt.-% $Al_{2,00}M_z(HPO_3)_y(OH)_v \times (H_2O)_w$ (II) where M is sodium, z is 0,005 to 0,15, y is 2,8 to 3,1, v is 0 to 0,4 and w is 0 to 4.

Preferably, component B is melamine polyphosphate.

In the flame retardant-stabilizer combination a component C is used which is a basic or amphoteric oxide, metal oxide, magnesium oxide, zinc oxide, manganese oxide, tin oxide, a metal hydroxide, magnesium hydroxide, hydrotalcite, hydrocalumite, dihydrotalcite, calcium hydroxide, zinc hydroxide, tin oxide hydrate, manganese hydroxide, silicate, zeolithe, silicic acid, glas-, glas-ceramic or ceramic-powder; magnesium carbonate magnesium-calcium-carbonate (dolomite); zinc stannate, zinc hydroxyl stannate, zinc phosphate, zinc sulfide, aluminium oxide, aluminium hydroxide, boehmite, aluminium sulfate hydroxide, aluminium phosphate, calcium oxide, manganese oxide, tin oxide, tin oxide hydrate, manganese hydroxide and/or basic zinc silicate.

In the flame retardant-stabilizer combination preferably from 50 to 99 % by weight of component A, from 0 to 50 % by weight of component B and from 1 to 20 % by weight of component C are present.

In the flame retardant-stabilizer combination preferably from 50 to 78 % by weight of component A, from 20 to 50 % by weight of component B and from 2 to 20 % by weight of component C are present.

In another embodiment of the invention, in the flame retardant-stabilizer combination from 60 to 98 % by weight of component A and from 2 to 40 % by weight of component C are present.

Preferably, the residual moisture content of said flame retardant-stabilizer combination is between 0.01 wt.-% and 10 wt.-%.

More preferably, the residual moisture content of said flame retardant-stabilizer combination is between 0.1 wt.-% and 1 wt.-%.

Preferably, the particle size of said flame retardant-stabilizer combination is between 1 μm and 100 μm.

Preferably, the bulk density of said flame retardant-stabilizer combination is between 100 g/L and 1000 g/L.

Preferably, the tap density of said flame retardant-stabilizer combination is between 200 g/L and 1200 g/L.

Preferably, the flame retardant-stabilizer combination comprising components A, C and optionally B used as a flame retardant or as an intermediate for preparation of flame retardants for thermoplastic polymers, for thermoset polymers, for clearcoats, for intumescent coatings, for wood and other cellulosic products, for polymer shaped body, film, thread or fiber, for production of flame-retardant polymer molding compositions, for production of flame-retardant polymer moldings and/or for rendering pure and blended polyester and cellulose fabrics flame-retardant by impregnation.

Preferably, the thermoplastic polymers are polyester, polystyrene and/or polyamide, and the thermoset polymers are unsaturated polyester resins, epoxy resins, polyurethanes and/or acrylates.

The flame retardant-stabilizer combination comprising components A, C and optionally B may be used to manufacture a flame-retardant plastics molding composition, polymer shaped body, film, thread or fiber comprising the flame retardant-stabilizer combination.

Preferably, the plastics used in the flame-retardant plastics molding composition, polymer shaped body, film,

thread or fiber, are thermoplastic polymers of the type high-impact polystyrene, polyphenylene ether, polyamides, polyesters, polycarbonates, thermoplastic polyurethanes and blends or polymer blends of the type ABS (acrylonitrile-butadiene-styrene) or PC/ABS (polycarbonate/acrylonitrile-butadiene-styrene) or PPE/HIPS (polyphenylene ether/HI polystyrene) plastics.

Preferred is a flame-retardant plastics molding composition, polymer shaped body, film, thread or fiber, which comprises the flame retardant-stabilizer combination in an amount of from 2 to 50 % by weight, based on the plastics molding composition.

More preferred is a flame-retardant plastics molding composition, polymer shaped body, film, thread or fiber, which comprises the flame retardant-stabilizer combination in an amount of from 10 to 30 % by weight, based on the plastics molding composition.

The flame-retardant plastics molding composition, polymer shaped body, film, thread or fiber is preferably used in or for connectors, power wetted parts in current distributors (RCCB), boards, potting compounds, power connectors, circuit breakers, lamp housing, LED housing, condenser housing, bobbins and fans, protection contacts, connectors, in / on circuit boards, casings for connectors, cables, flexible circuit boards, charger for mobile phones, engine covers, textile coatings, moldings in the form of components for the electrical / electronics sector, in particular for parts of printed circuit boards, housings, films, cables, switches, distribution boards, relays, resistors, capacitors, coils, lamps, diodes, LEDs, transistors, connectors, controllers, memories and sensors, in the form of large-area components, in particular housing parts for cabinets and in the form of elaborately designed components with sophisticated geometry.

Inventive combinations of phosphinic acid salts of the formula (I) [hereinafter also called "phosphinates"] and optionally synergists, for example melamine polyphosphate, distinctly improve stability in the course of incorporation into polymers when certain oxides, hydroxides, carbonates, silicates, borates, stannates, mixed oxide hydroxides, oxide hydroxide carbonates, hydroxide silicates or hydroxide borates or mixtures of these substances are added.

At the same time, the flame resistance is retained to the full.

The protonated nitrogen bases are preferably the protonated bases of ammonia, melamine, triethanolamine, in particular $NH_4^+$.

$R^1$, $R^2$ are the same or different and are more preferably each methyl, ethyl, n-propyl, isopropyl, n-butyl, tert-butyl, n-pentyl and/or phenyl.

Suitable phosphinates are described in PCT/WO97/39053, which is fully incorporated herein by way of reference.

Particularly preferred phosphinates are aluminum, calcium, zinc, titanium and iron phosphinates.

Also in accordance with the invention are synergistic combinations of the phosphinates specified with nitrogen compounds, said synergistic combinations being more effective as flame retardants in a whole series of polymers than the phosphinates alone (DE-A-196 14 424, DE-A-197 34 437 and DE-A-197 37 727). The flame retardancy of the phosphinates can be improved by combination with further flame retardants, preferably nitrogen synergists or phosphor/nitrogen flame retardants, for example those of the formulae (III) to (VIII) and others.

The synergists are preferably condensation products of melamine or highly condensed compounds of this type, and also mixtures thereof, and can be prepared, for example, by a process as described in WO-A-96/16948.

The phosphorus/nitrogen flame retardants are preferably reaction products of melamine with phosphoric acids or condensed phosphoric acids, or reaction products of condensation products of melamine with phosphoric acid or condensed phosphoric acids, or else mixtures of the products specified.

In this context, the reaction products with phosphoric acid or condensed phosphoric acids are compounds which result from reaction of melamine or the condensed melamine compounds, such as melam, melem or melon, etc., with phosphoric acid, see WO-A-1998/039306.

The phosphorus/nitrogen flame retardant is more preferably melamine polyphosphate.

Component C is preferably a metal oxide, more preferably a magnesium oxide, zinc oxide, manganese oxide and/or tin oxide.

Component C is preferably a amphoteric oxide, metal hydroxide, more preferably a magnesium hydroxide, hydrotalcite, hydrocalumite, dihydrotalcite, calcium hydroxide, zinc hydroxide, tin oxide hydrate and/or manganese hydroxides.

Component C is preferably a silicate, zeolithe, silicic acid, glass-, glass-ceramic or ceramic-powder; magnesium carbonate or magnesium-calcium-carbonate (Dolomite); zinc stannate, zinc hydroxystannate, zinc phosphate, or zinc sulfide, aluminium oxide, aluminium hydroxide, Boehmite, aluminium sulfate hydroxide or aluminium phosphate.

Component C is preferably calcium oxide, manganese oxide, tin oxide, tin oxide hydrate, manganese hydroxide, basic zinc silicate.

Component C is preferably zinc borate, basic zinc silicate or zinc stannate.

Component C is more preferably magnesium hydroxide, zinc oxide, dihydrotalcite or boehmite.

The ratios of components A, B and C in flame retardant-stabilizer combination depends substantially on the intended field of application and may vary within wide limits. Depending on the field of application, the flame retardant-stabilizer combinations comprise from 25 to 99.9 % by weight of component A, from 0 to 75 % by weight of component B and from 0.1 to 50 % by weight of component C.

The flame retardant-stabilizer combination comprising components A, C and optionally B may also comprise carbodiimides.

The plastics of the flame retardant plastics molding compositions comprising the flame retardant stabilizer combination are preferably thermoplastic polymers of the type high-impact polystyrene, polyphenylene ether, polyamides, polyesters, polycarbonates and blends or polymer blends of the type ABS (acrylonitrile-butadiene-styrene) or PC/ABS (polycarbonate/acrylonitrile-butadiene-styrene) or PPE/HIPS (polyphenylene ether/HI polystyrene) plastics.

The plastics are more preferably polyamides, polyesters and PPE/HIPS blends.

The polymers preferably originate from the group of the thermoplastic polymers such as polyester, polystyrene or polyamide, and/or the thermoset polymers.

The polymers are preferably polymers of mono- and diolefins, for example polypropylene, polyisobutylene, polybutene-1, poly-4-methylpentene-1, polyisoprene or polybutadiene, and addition polymers of cycloolefins, for example of cyclopentene or norbornene; and also polyethylene (which may optionally be crosslinked), e.g. high-density polyethylene (HDPE), high-density high-molar mass polyethylene (HDPE-HMW), high-density ultrahigh-molar mass polyethylene (HDPE-UHMW), medium-density polyethylene (MDPE), low-density polyethylene (LDPE), linear low-density polyethylene (LLDPE), branched low-density polyethylene (BLDPE), and mixtures thereof.

The polymers are preferably copolymers of mono- and diolefins with one another or with other vinyl monomers, for example ethylene-propylene copolymers, linear low-density polyethylene (LLDPE) and mixtures thereof with low-density polyethylene (LDPE), propylene-butene-1 copolymers, propylene-isobutylene copolymers, ethylene-butene-1 copolymers, ethylene-hexene copolymers, ethylene-methylpentene copolymers, ethylene-heptene copolymers, ethylene-octene copolymers, propylene-butadiene copolymers, isobutylene-isoprene copolymers, ethylene-alkyl acrylate copolymers, ethylene-alkyl methacrylate copolymers, ethylene-vinyl acetate copolymers and copolymers thereof with carbon monoxide, or ethylene-acrylic acid copolymers and salts thereof (ionomers), and also terpolymers of ethylene with propylene and a diene such as hexadiene, dicyclopentadiene or ethylidenenorbornene; and also mixtures of such copolymers with one another, e.g. polypropylene/ethylene-propylene copolymers, LDPE/ethylene-vinyl acetate copolymers, LOPE/ethylene-acrylic acid copolymers, LLDPE/ethylene-vinyl acetate copolymers, LLDPE/ethylene-acrylic acid copolymers and alternating or random polyalkylene/carbon monoxide copolymers and mixtures thereof with other polymers, for example polyamides.

The polymers are preferably hydrocarbon resins (e.g. $C_5$-$C_9$), including hydrogenated modifications thereof (e.g. tackifier resins) and mixtures of polyalkylenes and starch.

The polymers are preferably polystyrene (Polystyrene 143E (BASF)), poly(p-methylstyrene), poly(alpha-methylstyrene).

The polymers are preferably copolymers of styrene or alpha-methylstyrene with dienes or acrylic derivatives, for example styrene-butadiene, styrene-acrylonitrile, styrene-alkyl methacrylate, styrene-butadiene-alkyl acrylate and methacrylate, styrene-maleic anhydride, styrene-acrylonitrile-methyl acrylate; more impact-resistant mixtures of styrene copolymers and another polymer, for example a polyacrylate, a diene polymer or an ethylene-propylene-diene terpolymer; and block copolymers of styrene, for example styrene-butadiene-styrene, styreneisoprene-styrene, styrene-ethylene/-butylene-styrene or styrene-ethylene/propylene-styrene.

The polymers are preferably graft copolymers of styrene or alpha-methylstyrene, for example styrene onto polybutadiene, styrene onto polybutadiene-styrene or polybutadiene-acrylonitrile copolymers, styrene and acrylonitrile (or methacrylonitrile) onto polybutadiene; styrene, acrylonitrile and methyl methacrylate onto polybutadiene; styrene and maleic anhydride onto polybutadiene; styrene, acrylonitrile and maleic anhydride or maleimide onto polybutadiene; styrene and maleimide onto polybutadiene, styrene and alkyl acrylates or alkyl methacrylates onto polybutadiene, styrene and acrylonitrile onto ethylene-propylene-diene terpolymers, styrene and acrylonitrile onto polyalkyl acrylates or polyalkyl methacrylates, styrene and acrylonitrile onto acrylate-butadiene copolymers, and mixtures thereof, as known, for example, as ABS, MBS, ASA or AES polymers.

The styrene polymers are preferably comparatively coarse-pore foam such as EPS (expanded polystyrene), e.g. Styropor (BASF) and/or foam with relatively fine pores such as XPS (extruded rigid polystyrene foam), e.g. Styrodur® (BASF). Preference is given to polystyrene foams, for example Austrotherm® XPS, Styrofoam® (Dow Chemical), Floormate®, Jackodur®, Lustron®, Roofmate®, Styropor®, Styrodur®, Styrofoam®, Sagex® and Telgopor®.

The polymers are preferably halogenated polymers, for example polychloroprene, chlorine rubber, chlorinated and brominated copolymer of isobutylene-isoprene (halobutyl rubber), chlorinated or chlorosulfonated polyethylene, copolymers of ethylene and chlorinated ethylene, epichlorohydrin homo- and copolymers, especially polymers of halogenated vinyl compounds, for example polyvinyl chloride, polyvinylidene chloride, polyvinyl fluoride, polyvinylidene fluoride; and copolymers thereof, such as vinyl chloride-vinylidene chloride, vinyl chloride-vinyl acetate or vinylidene chloride-vinyl acetate.

The polymers are preferably polymers which derive from alpha, beta-unsaturated acids and derivatives thereof,

such as polyacrylates and polymethacrylates, polymethyl methacrylates, polyacrylamides and polyacrylonitriles impact-modified with butyl acrylate, and copolymers of the monomers mentioned with one another or with other unsaturated monomers, for example acrylonitrile-butadiene copolymers, acrylonitrile-alkyl acrylate copolymers, acrylonitrile-alkoxyalkyl acrylate copolymers, acrylonitrile-vinyl halide copolymers or acrylonitrile-alkyl methacrylate-butadiene terpolymers.

The polymers are preferably polymers which derive from unsaturated alcohols and amines or the acyl derivatives or acetals thereof, such as polyvinyl alcohol, polyvinyl acetate, stearate, benzoate or maleate, polyvinyl butyral, polyallyl phthalate, polyallylmelamine; and copolymers thereof with olefins.

The polymers are preferably homo- and copolymers of cyclic ethers, such as polyalkylene glycols, polyethylene oxide, polypropylene oxide or copolymers thereof with bisglycidyl ethers.

The polymers are preferably polyacetals such as polyoxymethylene, and those polyoxymethylenes which contain comonomers, for example ethylene oxide; polyacetals which have been modified with thermoplastic polyurethanes, acrylates or MBS.

The polymers are preferably polyphenylene oxides and sulfides and mixtures thereof with styrene polymers or polyamides.

The polymers are preferably polyurethanes which derive from polyethers, polyesters and polybutadienes having both terminal hydroxyl groups and aliphatic or aromatic polyisocyanates, and the precursors thereof.

The polymers are preferably polyamides and copolyamides which derive from diamines and dicarboxylic acids and/or from aminocarboxylic acids or the corresponding lactams, such as nylon 2/12, nylon 4 (poly-4-aminobutyric acid, Nylon® 4, from DuPont), nylon 4/6 (poly(tetramethyleneadipamide)), Nylon® 4/6, from DuPont), nylon 6 (polycaprolactam, poly-6-aminohexanoic acid, Nylon® 6, from DuPont, Akulon® K122, from DSM; Zytel® 7301, from DuPont; Durethan® B 29, from Bayer), nylon 6/6 ((poly(N,N'-hexamethyleneadipamide), Nylon® 6/6 , from DuPont , Zytel® 101, from DuPont; Durethan® A30, Durethan® AKV, Durethan® AM, from Bayer; Ultramid® A3, from BASF), nylon 6/9 (poly(hexamethylenenonanamide), Nylon® 6/9, from DuPont), nylon 6/10 (poly(hexamethylenesebacamide), Nylon® 6/10, from DuPont), nylon 6/12 (poly(hexamethylenedodecanediamide), Nylon® 6/12, from DuPont), nylon 6/66 (poly(hexamethyleneadipamide-co-caprolactam), Nylon® 6/66, from DuPont), nylon 7 (poly-7-aminoheptanoic acid, Nylon® 7, from DuPont), nylon 7,7 (polyheptamethylenepimelamide, Nylon® 7,7, from DuPont), nylon 8 (poly-8-aminooctanoic acid, Nylon® 8, from DuPont), nylon 8,8 (polyoctamethylenesuberamide, Nylon® 8,8, from DuPont), nylon 9 (poly-9-aminononanoic acid, Nylon® 9, from DuPont), nylon 9,9 (polynonamethyleneazelamide, Nylon® 9,9, from DuPont), nylon 10 (poly-10-aminodecanoic acid, Nylon® 10, from DuPont), nylon 10,9 (poly(decamethyleneazelamide), Nylon® 10,9, from DuPont), nylon 10,10 (polydecamethylenesebacamide, Nylon® 10,10, from DuPont), nylon 11 (poly-11-aminoundecanoic acid, Nylon® 11, from DuPont), nylon 12 (polylauryllactam, Nylon® 12, from DuPont, Grillamid® L20, from Ems Chemie), aromatic polyamides proceeding from m-xylene, diamine and adipic acid; polyamides prepared from hexamethylenediamine and iso- and/or terephthalic acid (polyhexamethyleneisophthalamide, polyhexamethyleneterephthalamide) and optionally an elastomer as a modifier, e.g. poly-2,4,4-trimethylhexamethyleneterephthalamide or poly-m-phenyleneisophthalamide; block copolymers of the aforementioned polyamides with polyolefins, olefin copolymers, ionomers or chemically bonded or grafted elastomers; or with polyethers, for example with polyethylene glycol, polypropylene glycol or polytetramethylene glycol. In addition, ethylene-propylene-diene rubber- (EPDM-) or ABS-modified polyamides or copolyamides; and polyamides condensed during processing ("RIM polyamide systems").

The polymers are preferably polyureas, polyimides, polyamidimides, polyetherimides, polyesterimides, polyhydantoins and polybenzimidazoles.

The polymers are preferably polyesters which derive from dicarboxylic acids and dialcohols and/or from hydroxycarboxylic acids or the corresponding lactones, such as polyethylene terephthalate, polybutylene terephthalate (Celanex® 2500, Celanex® 2002, from Celanese; Ultradur®, from BASF), poly-1,4-dimethylolcyclohexane terephthalate, polyhydroxybenzoates, and block polyether esters which derive from polyethers with hydroxyl end groups; and also polyesters modified with polycarbonates or MBS.

The polymers are preferably polycarbonates and polyester carbonates.

The polymers are preferably polysulfones, polyether sulfones and polyether ketones; crosslinked polymers which derive from aldehydes on the one hand, and phenols, urea or melamine on the other hand, such as phenol-formaldehyde, ureaformaldehyde and melamine-formaldehyde resins; drying and nondrying alkyd resins.

The polymers are preferably unsaturated polyester resins which derive from copolyesters of saturated and unsaturated dicarboxylic acids with polyhydric alcohols, and vinyl compounds as crosslinking agents, and also the halogenated, flame-retardant modifications thereof.

The polymers preferably comprise crosslinkable acrylic resins which derive from substituted acrylic esters, for example from epoxy acrylates, urethane acrylates or polyester acrylates.

Preferably, the polymers are alkyd resins, polyester resins and acrylate resins which have been crosslinked with melamine resins, urea resins, isocyanates, isocyanurates, polyisocyanates or epoxy resins.

The polymers are preferably crosslinked epoxy resins which derive from aliphatic, cycloaliphatic, heterocyclic or

aromatic glycidyl compounds, for example products of bisphenol A diglycidyl ethers, bisphenol F diglycidyl ethers, which are crosslinked by means of customary hardeners, for example anhydrides or amines, with or without accelerators.

The polymers are preferably mixtures (polyblends) of the abovementioned polymers, for example PP/EPDM (polypropylene/ethylene-propylene-diene rubber), polyamide/EPDM or ABS (polyamide/ethylene-propylene-diene rubber or acrylonitrile-butadiene-styrene), PVC/EVA (polyvinyl chloride/ethylene-vinyl acetate), PVC/ABS (polyvinyl chloride/acrylonitrile-butadiene-styrene), PVC/MBS (polyvinyl chloride/methacrylate-butadiene-styrene), PC/ABS (polycarbonate/acrylonitrile-butadiene-styrene), PBTP/ABS (polybutylene terephthalate/acrylonitrile-butadiene-styrene), PC/ASA (polycarbonate/acrylic ester-styrene-acrylonitrile), PC/PBT (polycarbonate/polybutylene terephthalate), PVC/CPE (polyvinyl chloride/chlorinated polyethylene), PVC/acrylate (polyvinyl chloride/acrylate, POM/thermoplastic PUR (polyoxymethylene/thermoplastic polyurethane), PC/thermoplastic PUR (polycarbonate/thermoplastic polyurethane), POM/acrylate (polyoxymethylene/acrylate), POM/MBS (polyoxymethylene/methacrylate-butadiene-styrene), PPO/HIPS (polyphenylene oxide/high-impact polystyrene), PPO/PA 6,6 (polyphenylene oxide/nylon 6,6) and copolymers, PA/HDPE (polyamide/high-density polyethylene), PA/PP (polyamide/polyethylene), PA/PPO (polyamide/polyphenylene oxide), PBT/PC/ABS (polybutylene terephthalate/polycarbonate/acrylonitrile-butadiene-styrene) and/or PBT/PET/PC (polybutylene terephthalate/polyethylene terephthalate/polycarbonate).

Preference is given to using the flame retardant-stabilizer combination in the plastics molding composition in a total amount of from 2 to 50 % by weight, based on the plastics molding composition.

Particular preference is given to using a flame retardant-stabilizer combination in the plastics molding composition in a total amount of from 10 to 30 % by weight, based on the plastics molding composition.

The polymer shaped bodies, films, threads and fibers are high-impact polystyrene, polyphenylene ethers, polyamides, polyesters, polycarbonates and blends or polymer blends of the type ABS (acrylonitrile-butadiene-styrene) or PC/ABS (polycarbonate/acrylonitrile-butadiene-styrene), polyamide, polyester and/or ABS.

The polymer shaped bodies, films, threads and fibers preferably each contain the flame retardant-stabilizer combination in a total amount of from 2 to 50 % by weight, based on the total amount of from 2 to 50 % by weight, based on the polymer content.

The polymer shaped bodies, films, threads and fibers more preferably contain the flame retardant-stabilizer combination in a total amount of from 10 to 30 % by weight, based on the polymer content.

In a particular embodiment, the polymer shaped bodies, films, threads and fibers contain from 2 to 30 % by weight of the flame retardant-stabilizer combination, consisting of from 50 to 80 % by weight of component A, from 20 to 50 % by weight of component B and from 2 to 20 % by weight of component C, based on the polymer content.

In a particular embodiment, the polymer shaped bodies, films, threads and fibers contain from 2 to 30 % by weight of the flame retardant-stabilizer combination, consisting of from 60 to 98 % by weight of component A and from 2 to 40 % by weight of component C, based on the polymer content.

The aforementioned additives can be incorporated into the plastics in highly varying process steps. For instance, it is possible in the case of polyamides or polyesters to incorporate the additives into the polymer melt as early as the beginning, or at the end, of the polymerization/polycondensation or in a following compounding operation. In addition, there are processing operations in which the additives are not added until later. This is practiced in particular when pigment or additive masterbatches are used. There is also the possibility of drum application, especially of pulverulent additives, to the polymer granules which may possibly still be warm as a result of the drying operation.

The flame retardant-stabilizer combination is preferably present as granules, flakes, fine particles, powder and/or micronized material.

The flame retardant-stabilizer combination is preferably present as a physical mixture of the solids, as a melt mixture, as compacted material, as an extrudate or in the form of a masterbatch.

The flame retardant-stabilizer combination is preferably produced by dry mixing components A, B and C.

The flame retardant-stabilizer combination is preferably produced by precipitating components A, B and C.

The flame retardant-stabilizer combination is preferably produced by mixing components A, B and C using liquid processing aids.

Preferred liquid processing aids are water, solvents, polymer additives having melting points of 0 to 150 °C.

Suitable mixers may be: plowshare mixers from the company Lödige, rotating-disc mixers from the company Lödige, (e.g. CB30), Flexomix mixers from the company Schugi, HEC rotating-disc mixers from the company Niro, rotating-disc mixers (e.g. K-TTE4) from the company Drais, Mannheim, Eirich mixers (e.g. R02), Telschig mixers (WPA6), zig-zag mixers from the company Niro. Suitable temperatures for the mixing are from 20 to 200 °C.

If liquid processing aids are used the product mixture can be dried in a suitable dryer, or heat-treated to enlarge the particles. Dryers of the invention may be: fluidized-bed dryers from the company Hosokawa Schugi (Schugi Fluid-Bed, Vometec fluidized-bed dryers), fluidized-bed dryers from the company Waldner or from the company Glatt, turbo-fluidized-bed dryers from the company Waldner, spin-flash dryers from the company Anhydro, or else drum dryers.

Preferred operating conditions in the fluidized-bed dryer are: air inlet temperature from 120 to 280 °C, product temperature from 20 to 200 °C.

Preferred solvents are acetone, methyl ethylketone , alcoholes, water, benzene, toluene, xylene, esters, dimethyl formamide, alkyl glycols, propylene glykolmethyletheracetate, diethylene glycolethyletheracetate, polyethylene glycoldimethylether, ethyl acetate, butyl acetate, ethers such as dioxane, tetrahydrofurane, diethyl ether, methyl-tert.-butyl ether, alkanes e.g. n-dodecane, paraffines, cycloalkanes, N-methyl-pyrrolidone, carbonic acid such as acetic acid, acetic acid anhydride, formic acid, propionic acid, gasolines, white spirit, amyl acetate, pyridine, carbon sulfide, dimethyl sulfoxide, dichlor methane, chloroform, tetrachlorcarbon, nitro methane, N-dimethyl acetamide, nitro benzene, triethyl phosphate, triaryl phosphate, resorcinol diphosphoric acid tetraphenylester, dimethyl methylphosphonate, phosphonate ester, phosphoric acid ester, phosphoric acid pyroester, alkyl phosphonic acids and/or their oxalkylated derivatives.

The dialkylphosphinate has a moisture content of between 0.01 wt.-% and 10 wt.-%.

The dialkylphosphinate has a particle size of between 1 µm and 100 µm.

The dialkylphosphinate has a bulk density of between 100 g/L and 1000 g/L.

The dialkylphosphinate has a tap density of between 200 g/L and 1200 g/L.

The synergist - component B - has a moisture content of between 0.01 wt.-% and 10 wt.-%.

The synergist - component B - has a particle size of between 1 µm and 100 µm.

The synergist - component B - has a bulk density of between 100 g/L and 1000 g/L.

The synergist - component B - has a tap density of between 200 g/L and 1200 g/L.

The component C has a moisture content of between 0.01 wt.-% and 10 wt.-%.

The component C has a particle size of between 1 µm and 100 µm.

The component C has a bulk density of between 100 g/L and 1000 g/L.

The component C has a tap density of between 200 g/L and 1200 g/L.

Preference is given to using the mixture in a molding composition of a polyamide or of a polyester. Suitable polyamides are described, for example, in DE-A-199 20 276.

The polyamides are preferably those of the amino acid type and/or of the diamine and dicarboxylic acid type.

The polyamides are preferably Polyamide-6 and/or Polyamide-6,6.

The polyamides are preferably unmodified, colored, filled, unfilled, reinforced, unreinforced, or else otherwise modified.

The polyesters are preferably polyethylene terephthalate or polybutylene phthalate.

The polyesters are preferably unmodified, colored, filled unfilled, reinforced, unreinforced or else otherwise modified.

Carbodiimides may additionally be present.

Optionally, further additives may be added to the polymers. Additives which may be added include waxes, light protectants, stabilizers, antioxidants, antistats or mixtures of such additives.

Stabilizers which may used with preference include phosphonites and phosphites or carbodiimides.

The aforementioned additives may also be added to the flame retardant-stabilizer combination.

Examples

1. Components used

Standard commercial polymers (granules):

| | |
|---|---|
| PA 6,6 GF: | Durethan® AKV 30 (Bayer AG, D), contains 30 % glass fibers. |
| PBT GF: | Celanex® 2300 GV1/30 (Ticona, D), contains 30 % glass fibers. |
| PA 6: | Ultramid® B 27 E |
| PA 6,6: | Ultramid® A 27 E (BASF) |
| Glas fiber: | PPG Glas fiber HP 3610 EC 10 4,5 mm |

Flame retardant components (pulverulent):

Aluminum salts of diethylphosphinic acid, referred to hereinbelow as DEPAL.
Melapur® 200 (melamine polyphosphate, MPP), referred to hereinbelow as MPP, from BASF, Germany.
Zinc borate anhydrate (Zn-Borate) Firebrake® Rio Tinto

Aluminiumphosphite (AP) according to DE102014001222 (A1)
Zinkoxyd aktiv (ZnO), Bayer AG, Germany

2. Production, processing and testing of flame-retardant plastics molding compositions

The flame-retardant components were mixed with the polymer granules, lubricants and stabilizers in the ratio specified in the tables and incorporated in a Leistritz LSM 30/34 double-screw extruder at temperatures of from 260 to 310 °C (GFR PA-6,6) or from 240 to 280 °C (GFR PBT). The homogenized polymer strand was drawn off, cooled in a water bath and then granulated.

After sufficient drying, the molding compositions were processed to give test specimens on a Arburg 320 C Allrounder injection molding machine at temperatures of from 270 to 320 °C (GFR PA-6,6) or from 260 to 280 °C (GFR PBT) and, with the aid of the UL 94 test (Underwriter Laboratories), were tested for flame resistance and classified.

The flowability of the molding composition was determined by determining the melt volume index (MVR) at 275 °C/2.16 kg. A sharp rise in the MVR value indicated polymer degradation.

The processing properties in polyester were assessed with reference to the specific viscosity (SV). After sufficient drying, the plastics molding composition granules were used to prepare a 1.0 % solution in dichloroacetic acid and the SV value was determined. The higher the SV value is, the lower was the polymer degradation during the incorporation of the flame retardant.

Unless stated otherwise, all experiments of a particular series were carried out under identical conditions (temperature program, screw geometries, injection molding parameters, etc.) for the purpose of comparability.

Thus, for the inventive flame retardant-stabilizer combinations of phosphinate, synergist and component C, an improvement in the angle of repose can be detected.

It is evident from the examples that the additives according to the invention (mixture of the components phosphinate, synergist and oxide or hydroxide or mixed oxide hydroxide or oxide hydroxide carbonate) distinctly improve the processibility of the polymers without impairing the flame retardancy.

In the flame-retardants polyester (PBT), the employment of the inventive combination of phosphinate, synergist and metal oxide or hydroxide leads to distinctly reduced polymer degradation, recognizable by high SV values.

Unless stated otherwise, the amounts quoted are always in percent by weight.

In the present invention, angle of repose were used to evaluate the flowability of said dialkylphosphinate. For example, to measure the angle of repose, the powder sample was poured through a funnel and dropped down to a round plate with a radius of r. The powder was continuously poured into the funnel and accumulated into a cone-shaped pile growing up until the height of the pile did not increase. The height of the pile, h, was measured and the angle of repose, $\alpha$, was calculated according to formula (1)

$$\mathrm{tg}\ \alpha = h/r \qquad (1)$$

The smaller $\alpha$ is, the better the flowability of the powder is. Generally, when $\alpha$ is smaller than 30°, the powder can flow freely; when $\alpha$ is between 30° and 40°, the powder can meet the processing requirements; when $\alpha$ is greater than 40°, the powder cannot meet the processing requirements.

Example 1a (Comparison)

A sample produced according to CN-A-104059101 was tested for its angle of repose. The result is listed in Table 1.

Example 1b (Comparison)

A flame retardant-stabilizer combination according to the invention was mixed from aluminiumdiethylphosphinate, component B in types and amounts according to table 1. It was tested for its angle of repose, the result is worse than pure aluminium-phosphinate and listed in table 1.

Example 2

A flame retardant-stabilizer combination according to the invention was mixed from aluminiumdiethylphosphinate and component C in types and amounts according to table 1. It was tested for its angle of repose, the result is listed in table 1 and is better than comparative example 1.

Example 3

A flame retardant-stabilizer combination according to the invention was mixed from aluminiumdiethylphosphinate and component C in types and amounts according to table 1. It was tested for its angle of repose, the result is listed in table 1 and is better than comparative example 1.

Example 4

A flame retardant-stabilizer combination according to the invention was mixed from aluminiumdiethylphosphinate, component B and component C in types and amounts according to table 1. It was tested for its angle of repose, the very good result is listed in table 1.

Example 5

A flame retardant-stabilizer combination according to the invention was mixed from aluminiumdiethylphosphinate, component B and component C in types and amounts according to table 1. It was tested for its angle of repose, the very good result is listed in table 1.

Example 6

A flame retardant-stabilizer combination according to the invention was mixed from aluminiumdiethylphosphinate and component C in types and amounts according to table 1. It was tested for its angle of repose, the result is listed in table 1 and is better than comparative example 1.

Example 7

A flame retardant-stabilizer combination according to the invention was mixed from aluminiumdiethylphosphinate, component B and component C in types and amounts according to table 1. It was tested for its angle of repose, the very good result is listed in table 1.

Example 8

A flame retardant-stabilizer combination according to the invention was mixed from aluminiumdiethylphosphinate, component B and component C in types and amounts according to table 1. It was tested for its angle of repose, the very good result is listed in table 1.

Example 9

A flame retardant-stabilizer combination according to the invention was mixed from aluminiumdiethylphosphinate, component B and component C in types and amounts according to table 1. It was tested for its angle of repose, the very good result is listed in table 1.

Table 1: Compositions of flame retardant-stabilizer combinations and angles of repose

| Example | Aluminium-phospinate [wt.-%] | component | | | | Angle of repose [°] |
|---|---|---|---|---|---|---|
| | | B | | C | | |
| | | | [wt.-%] | | [wt.-%] | |
| 1a (Comp.) | 100 | - | - | - | - | 25 |
| 1b (Comp.) | 67,0 | MPP | 33,0 | - | - | 35 |
| 2 | 99,9 | - | 0 | ZnO | 0,1 | 24,9 |
| 3 | 80 | - | 0 | ZnO | 20 | 23 |
| 4 | 66,9 | MPP | 33,0 | ZnO | 0,1 | 27 |
| 5 | 53,6 | MPP | 26,4 | ZnO | 20 | 30 |
| 6 | 99,8 | - | - | Zn-Borate | 0,2 | 22 |
| 7 | 65,7 | MPP | 32,3 | Zn-Borate | 2 | 26 |

(continued)

| Example | Aluminium-phospinate [wt.-%] | component | | | | Angle of repose [°] |
|---|---|---|---|---|---|---|
| | | B | | C | | |
| | | | [wt.-%] | | [wt.-%] | |
| 8 | 60,3 | MPP | 29,7 | Zn-Borate | 10 | 27 |
| 9 | 81,2 | AP | 17,8 | Zn-borate | 1 | 26 |

It can be seen from table 1 that components C improve the repose angle (i.e. decrease the numeric value). Aluminiumdiethylphosphinate plus components C are better than pure aluminiumdiethylphosphinate.

Component B (although important for flame retardancy) worsen the repose angle (i.e. decrease the numeric value).

But the inventive combination of aluminiumdiethylphosphinate / component B plus components C improves the repose angle in comparison to only aluminiumdiethylphosphinate and component B.

Example 10

A flame-retardant molding composition comprising the combination of aluminiumdiethylphosphinate, component B and component C in glass fiber-reinforced PA-6 was produced in the composition according to table using a melt temperature on injection molding of 290°C.

Example 11

A flame-retardant molding composition comprising the combination of aluminiumdiethylphosphinate, component B and component C in glass fiber-reinforced PA-6,6 was produced in the composition according to table using a melt temperature on injection molding of 300 °C.

Example 12

A flame-retardant molding composition comprising the combination of aluminiumdiethylphosphinate, component B and component C in glass fiber-reinforced PA-6,6 was produced in the composition according to table using a melt temperature on injection molding of 300 °C.

Example 13

A flame-retardant molding composition comprising the combination of aluminiumdiethylphosphinate, component B and component C in glass fiber-reinforced PA-6,6 was produced in the composition according to table using a melt temperature on injection molding of 300 °C.

Example 14

A flame-retardant molding composition comprising the combination of aluminiumdiethylphosphinate, component B and component C in glass fiber-reinforced PA-6,6 was produced in the composition according to table using a melt temperature on injection molding of 300 °C.

Example 15

A flame-retardant molding composition comprising the combination of aluminiumdiethylphosphinate, component B and component C in glass fiber-reinforced PBT was produced in the composition according to table using a melt temperature on injection molding of 275 °C

Table 2: Compositions of flame-retardant molding compositions and test results

| Example | Polymer | | Glas fiber (calc.) | Flame retard.-stab. comb | | UL 94 class (0.8 mm) [-] |
|---|---|---|---|---|---|---|
| | Type | [wt.-%] | [wt.-%] | acc. to exp. | [wt.-%] | |
| 10 | PA 6 | 52 | 30 | 7 | 18 | V-0 |

(continued)

| Example | Polymer | | Glas fiber (calc.) | Flame retard.-stab. comb | | UL 94 class (0.8 mm) [-] |
|---|---|---|---|---|---|---|
| | Type | [wt.-%] | [wt.-%] | acc. to exp. | [wt.-%] | |
| 11 | PA 6,6 | 80 | 0 | 2 | 20 | V-0 |
| 12 | PA 6,6 | 72 | 10 | 9 | 18 | V-0 |
| 13 | PA 6,6 GF | 82 | (24,6) | 7 | 18 | V-0 |
| 14 | PA 6,6 | 42 | 40 | 6 | 18 | V-0 |
| 15 | PBT GF | 82 | (24,6) | 8 | 18 | V-0 |

## Claims

**1.** Use of a component C selected from the group of a metal oxide, a basic or amphoteric oxide, a metal hydroxide, a silicate, a zeolithe, a silicic acid, a glas-, glas-ceramic- or ceramic-powder, magnesium carbonate, magnesium-calcium-carbonate (Dolomite); zinc stannate, zinc hydroxyl stannate, zinc phosphate, zinc sulfide, zinc borate or aluminium phosphate to prepare a flame retardant-stabilizer combination for thermoplastic polymers, comprising, as component A, from 25 to 99.9% by weight of a phosphinic acid salt of the formula (I)

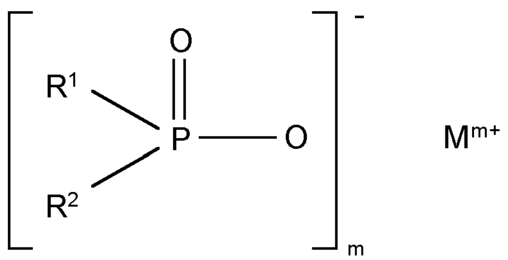

(I)

wherein

$R^1$, $R^2$ are the same or different and are each $C_1$-$C_{18}$-alkyl, linear or branched, $C_6$-$C_{18}$-aryl, $C_7$-$C_{18}$-arylalkyl or $C_7$-$C_{18}$-alkylaryl, or $R^1$ and $R^2$ form one or more rings with each other,
M is Mg, Ca, Al, Sb, Sn, Ge, Ti, Zn, Fe, Zr, Ce, Bi, Sr, Mn, Li, Na, K and/or a protonated nitrogen base;
m is from 1 to 4;
as component B, from 0 to 75 % by weight of a synergist or of a phosphorus/nitrogen flame retardant and, from 0.1 to 50 % by weight of said component C, the sum of the components always being 100 % by weight, wherein the angle of repose of said flame retardant-stabilizer combination is between 5° and 45° as measured by continuously pouring a powder sample through a dropping down to a round plate with a radius of r, accumulating the powder into a cone-shaped pile growing up until the height of the pile did not increase, measuring the height of the pile, h and calculating the angle of repose, $\alpha$, was according to formula tg $\alpha$ = h/r, and wherein the angle of repose of the flame retardant-stabilizer combination comprising component C) has a decreased numeric value compared to the angle of repose of a flame retardant-stabilizer combination comprising the same components A and B but without component C).

**2.** Use as claimed in claim 1, wherein the angle of repose of said flame retardant-stabilizer combination is between 20° and 40°.

**3.** Use as claimed in claim 1 or 2, wherein $R^1$, $R^2$ are the same or different and are each methyl, ethyl, n-propyl, isopropyl, n-butyl, tert-butyl, n-pentyl, 2-pentyl, 3-pentyl, 2-methylbutyl, 3-methylbutyl (iso-mentyl), 3-methylbut-2-yl, 2-methylbut-2-yl, 2,2-dimethylpropyl (neopentyl), hexyl, heptyl, octyl, nonyl, decyl, cyclopentyl, cyclopentylethyl, cyclohexyl, cyclohexylethyl, phenyl, phenylethyl, methylphenyl und/oder methylphenylethyl

**4.** Use as claimed in one or more of claims 1 to 3, wherein M is a calcium, aluminum, zinc, titanium or iron ion.

**5.** Use as claimed in one or more of claims 1 to 4, wherein component B comprises one or more of groups a) - e)

a) condensation products of melamine,
b) reaction products of melamine with polyphosphoric acid and/or reaction products of condensation products of melamine with polyphosphoric acid or mixtures thereof,
c) phosphates of the formulae $(NH_4)_y H_{3-y} PO_4$ or $(NH_4 PO_3)_z$, where y is from 1 to 3 and z is from 1 to 10 000,
d) N-synergists of the formulae (III) to (VIII) or mixtures thereof.

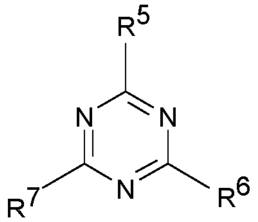

(III)

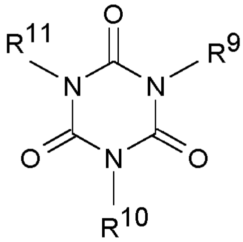

(IV)

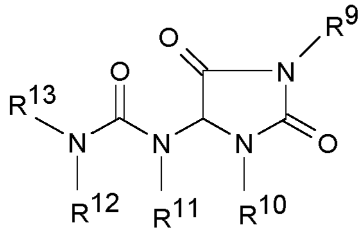

(V)

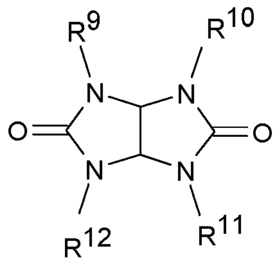

(VI)

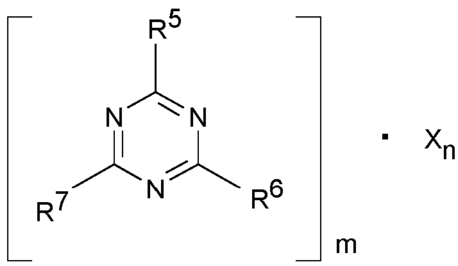

(VII)

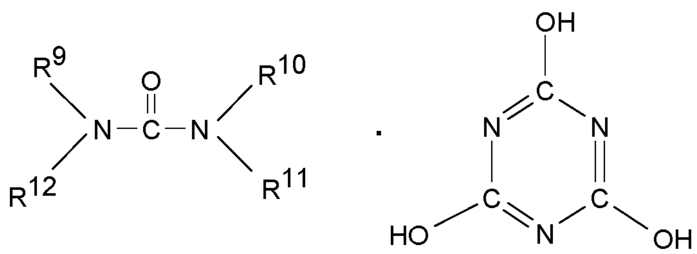

(VIII)

where

$R^5$ to $R^7$ are each hydrogen, $C_1$-$C_8$-alkyl, $C_5$-$C_{16}$-cycloalkyl or -alkylcycloalkyl, possibly substituted by a hydroxyl or a $C_1$-$C_4$-hydroxyalkyl function, $C_2$-$C_8$-alkenyl, $C_1$-$C_8$-alkoxy, -acyl, -acyloxy, $C_6$-$C_{12}$-aryl or -arylalkyl, $-OR^8$ and $-N(R^8)R^9$, N-alicyclic or N-aromatic,
$R^8$ is hydrogen, $C_1$-$C_8$-alkyl, $C_5$-$C_{16}$-cycloalkyl or -alkylcycloalkyl, possibly substituted by a hydroxyl or a $C_1$-$C_4$-hydroxyalkyl function, $C_2$-$C_8$-alkenyl, $C_1$-$C_8$-alkoxy, -acyl, -acyloxy or $C_6$-$C_{12}$-aryl or -arylalkyl,
$R^9$ to $R^{13}$ are each the same groups as $R^8$ and also $-O-R^8$,
m and n are each independently of 1, 2, 3 or 4,
X is an acid which can form adducts with triazine compounds (III);

or oligomeric esters of tris(hydroxyethyl) isocyanurate with aromatic polycarboxylic acids,
e) aluminium phosphites.

**6.** Use as claimed in claim 5, wherein

the condensation products a) of melamine are melem, melam, melon and/or more highly condensed compounds thereof;
the reaction products of melamine b) are dimelamine pyrophosphate, melamine polyphosphate, melem polyphosphate, melam polyphosphate, melon polyphosphate and/or mixed polysalts of this type;
the phosphates c) are ammonium hydrogenphosphate, ammonium dihydrogenphosphate and/or ammonium polyphosphate;
the N-synergists d) are benzoguanamine, tris(hydroxyethyl) isocyanurate, allantoin, glycouril, melamine, melamine cyanurate, dicyandiamide and/or guanidine;
the aluminium phosphites e) are of the formula (IX), (II) and/or (X)

$$Al_2(HPO_3)_3 \text{ x } (H_2O)_q \quad \text{(IX)}$$

where

q is 0 to 4

$$Al_{2,00}M_z(HPO_3)_y(OH)_v \text{ x } (H_2O)_w \quad \text{(II)}$$

where

M are Alkali metal ions
z 0,01 to 1,5
y 2,63 to 3,5
v 0 to 2 and
w 0 to 4,

$$Al_{2,00}(HPO_3)_u(H_2PO_3)_t \text{ x } (H_2O)_s \quad \text{(X)}$$

where

u is 2 to 2,99
t 2 to 0,01 and
s 0 to 4

and/or mixtures of aluminium phosphite of formula (IX) with aluminium salt of limited solubility and nitrogen free ions, mixtures of aluminium phosphite of formula (X) with aluminium salts, aluminium phosphite [Al(H2PO$_3$)$_3$], secondary aluminium phosphite [$Al_2(HPO_3)_3$], basic aluminium phosphite [$Al(OH)(H_2PO_3)_2$*2aq], aluminium phosphite tetrahydrate [$Al_2(HPO_3)_3$*4aq], aluminium phosphonate, $Al_7(HPO_3)_9(OH)_6$(1,6-hexandiamine)$_{1,5}$*12$H_2O$, $Al_2(HPO_3)_3$*x$Al_2O_3$*n$H_2O$ with x = 2,27 - 1, $Al_4H_6P_{16}O_{18}$ and/or mixtures of 0 - 99,9 wt.-% $Al_2(HPO_3)_3$*n$H_2O$ with 0,1 - 100 Gew.-% sodium aluminium phosphite.

**7.** Use as claimed in one or more of claims 5 to 6, wherein the aluminium phosphite is a mixture of 50 - 99 wt.-% $Al_2(HPO_3)_3$ x $(H_2O)_q$ where q is 0 to 4 with 1 - 50 wt.-% sodium aluminium phosphite.

**8.** Use as claimed in one or more of claims 5 to 6, wherein the aluminium phosphite is a mixture of 50 - 99 wt.-% $Al_2(HPO_3)_3$ x $(H_2O)_q$ where q is 0 to 4 with 1 - 50 wt.-% $Al_{2,00}M_z(HPO_3)_y(OH)_v$ x $(H_2O)_w$ (II) where M is sodium, z is 0,005 to 0,15, y is 2,8 to 3,1, v is 0 to 0,4 and w is 0 to 4.

**9.** Use as claimed in one or more claims 1 to 6, wherein component B is melamine polyphosphate.

**10.** Use as claimed in one or more of claims 1 to 9, wherein component C is selected from magnesium oxide, zinc oxide, manganese oxide, tin oxide, magnesium hydroxide, hydrotalcite, hydrocalumite, dihydrotalcite, calcium hydroxide, zinc hydroxide, tin oxide hydrate, manganese hydroxide, magnesium carbonate magnesium-calcium-carbonate (Dolomite); zinc stannate, zinc hydroxyl stannate, zinc phosphate, zinc sulfide, aluminium oxide, aluminium hydroxide, Boehmite, aluminium sulfate hydroxide, aluminium phosphate, calcium oxide, basic zinc silicate or zinc borate.

**11.** Use as claimed in claim 1, wherein component C is selected from calcium oxide, manganese oxide, tin oxide, tin oxide

hydrate, manganese hydroxide, basic zinc silicate, zinc borate, zinc stannate, magnesium hydroxide, zinc oxide, dihydrotalcite or Boehmite

**12.** Use as claimed in claim 1, wherein component C is selected from magnesium oxide, zinc oxide, manganese oxide, tin oxide, dihydrotalcite, hydrocalumite, magnesium hydroxide, calcium hydroxide, zinc hydroxide, tin oxide hydrate, manganese hydroxide, zinc borate, basic zinc silicate, zinc stannate or mixtures of these substances, the sum of the components always being 100 % by weight.

**13.** Use as claimed in one or more of claims 1 to 12, wherein from 50 to 99 % by weight of component A, from 0 to 50 % by weight of component B and from 1 to 20 % by weight of component C are present.

**14.** Use as claimed in one or more of claims 1 to 13, wherein from 50 to 78 % by weight of component A, from 20 to 50 % by weight of component B and from 2 to 20 % by weight of component C are present.

**15.** Use as claimed in one or more of claims 1 to 14, wherein from 60 to 98 % by weight of component A and from 2 to 40 % by weight of component C are present.

**16.** A flame retardant-stabilizer combination as claimed in one or more of claims 1 to 15, **characterised in that** the residual moisture content of said flame retardant-stabilizer combination is between 0.01 wt.-% and 10 wt.-%, and preferably between 0.1 wt.-% and 1 wt.-%.

**17.** A flame retardant-stabilizer combination as claimed in one or more of claims 1 to 16, **characterised in that** the bulk density of said flame retardant-stabilizer combination is between 100 g/L and 1000 g/L.

**18.** A flame retardant-stabilizer combination as claimed in one or more of claims 1 to 17, **characterised in that** the tap density of said flame retardant-stabilizer combination is between 200 g/L and 1200 g/L.

**Patentansprüche**

**1.** Verwendung einer Komponente C ausgewählt aus der Gruppe von einem Metalloxid, einem basischen oder amphoteren Oxid, einem Metallhydroxid, einem Silikat, einem Zeolith, einer Kieselsäure, einem Glas-, Glaskeramik- oder Keramikpulver, Magnesiumcarbonat, Magnesiumcalciumcarbonat (Dolomit); Zinkstannat, Zinkhydroxylstannat, Zinkphosphat, Zinksulfid, Zinkborat oder Aluminiumphosphat zur Herstellung einer Flammschutzmittel-Stabilisator-Kombination für thermoplastische Polymere, umfassend als Komponente A von 25 bis 99,9 Gew.-% am einem Phosphinsäuresalzes der Formel (I),

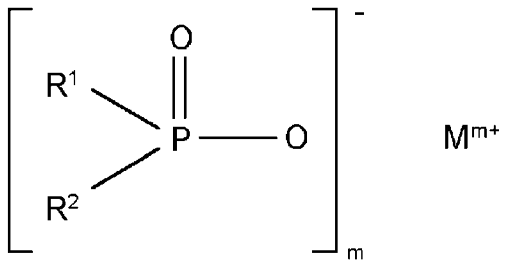

(I)

wobei

$R^1$, $R^2$ gleich oder verschieden sind und jeweils $C_1$-$C_{18}$-Alkyl, linear oder verzweigt, $C_6$-$C_{18}$-Aryl, $C_7$-$C_{18}$-Arylalkyl oder $C_7$-$C_{18}$-Alkylaryl sind oder $R^1$ und $R^2$ einen oder mehrere Ringe miteinander bilden,
M Mg, Ca, Al, Sb, Sn, Ge, Ti, Zn, Fe, Zr, Ce, Bi, Sr, Mn, Li, Na, K und/oder eine protonierte Stickstoffbase ist; m von 1 bis 4 beträgt;
als Komponente B von 0 bis 75 Gew.-% an einem Synergisten oder einem Phosphor/Stickstoff-Flammschutzmittel und von 0,1 bis 50 Gew.-% an der Komponente C, wobei die Summe der Komponenten immer 100 Gew.-% beträgt,
wobei der Schüttwinkel der Flammschutzmittel-Stabilisator-Kombination zwischen 5° und 45° beträgt, wie gemessen durch kontinuierliches Gießen einer Pulverprobe durch Fallenlassen auf eine runde Platte mit einem

Radius von r, Akkumulieren des Pulvers zu einem kegelförmigen Haufen, der wächst, bis die Höhe des Haufens nicht mehr zunimmt, Messen der Höhe des Haufens, h, und Berechnen des Schüttwinkels, $\alpha$, gemäß der Formel tg $\alpha$ = h/r, und wobei der Schüttwinkel der Flammschutzmittel-Stabilisator-Kombination, die Komponente C) umfasst, einen kleineren Zahlenwert im Vergleich zu dem Schüttwinkel einer Flammschutzmittel-Stabilisator-Kombination, die die gleichen Komponenten A und B aber nicht Komponente C) umfasst, aufweist.

**2.** Verwendung nach Anspruch 1, wobei der Schüttwinkel der Flammschutzmittel-Stabilisator-Kombination zwischen 20° und 40° beträgt.

**3.** Verwendung nach Anspruch 1 oder 2, wobei $R^1$, $R^2$ gleich oder verschieden sind und jeweils Methyl, Ethyl, n-Propyl, Isopropyl, n-Butyl, tert-Butyl, n-Pentyl, 2-Pentyl, 3-Pentyl, 2-Methylbutyl, 3-Methylbutyl (iso-Mentyl), 3-Methylbut-2-yl, 2-Methylbut-2-yl, 2,2-Dimethylpropyl (Neopentyl), Hexyl, Heptyl, Octyl, Nonyl, Decyl, cyclopentyl, Cyclopentylethyl, Cyclohexyl, Cyclohexylethyl, Phenyl, Phenylethyl, Methylphenyl und/oder Methylphenylethyl sind.

**4.** Verwendung nach einem oder mehreren der Ansprüche 1 bis 3, wobei M ein Calcium-, Aluminium-, Zink-, Titan- oder Eisenion ist.

**5.** Verwendung nach einem oder mehreren der Ansprüche 1 bis 4, wobei Komponente B eine oder mehrere der Gruppen a) bis e) umfasst

a) Kondensationsprodukte von Melamin,
b) Reaktionsprodukte von Melamin mit Polyphosphorsäure und/oder Reaktionsprodukte von Kondensationsprodukten von Melamin mit Polyphosphorsäure oder Gemischen davon,
c) Phosphate der Formeln $(NH_4)_y H_{3-y} PO_4$ oder $(NH_4 PO_3)_z$, wobei y von 1 bis 3 ist und z von 1 bis 10 000 ist,
d) N-Synergisten der Formeln (III) bis (VIII) oder Gemische davon,

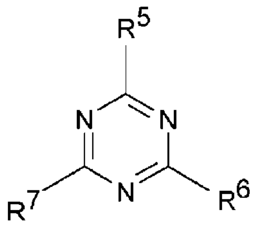

(III)

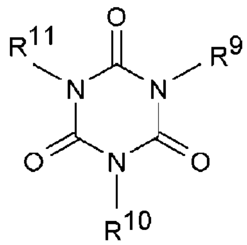

(IV)

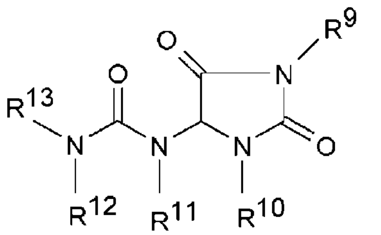

(V)

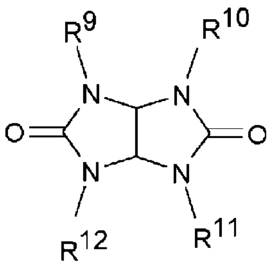

(VI)

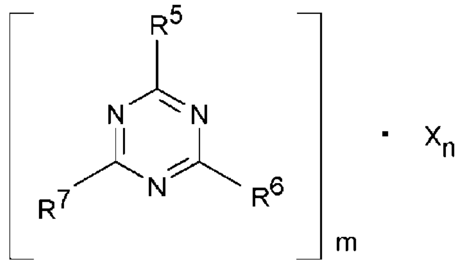

(VII)

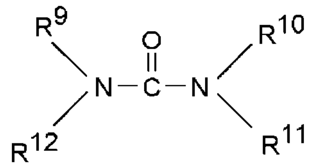 · 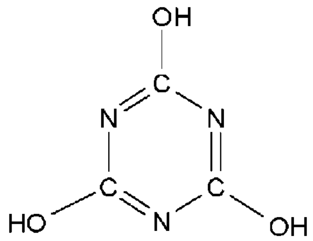 (VIII)

wobei

$R^5$ bis $R^7$ jeweils Wasserstoff, $C_1$-$C_8$-Alkyl, $C_5$-$C_{16}$-Cycloalkyl oder -Alkylcycloalkyl, gegebenenfalls substituiert mit einer Hydroxy- oder einer $C_1$-$C_4$-Hydroxyalkylfunktion, $C_2$-$C_8$-Alkenyl, $C_1$-$C_8$-Alkoxy, -Acyl, -Acyloxy, $C_6$-$C_{12}$-A$_r$yl oder -Arylalkyl, -$OR^8$ und -$N(R^8)R^9$, N-alicyclisch oder N-aromatisch sind,
$R^8$ Wasserstoff, $C_1$-$C_8$-Alkyl, $C_5$-$C_{16}$-Cycloalkyl oder - Alkylcycloalkyl, gegebenenfalls substituiert mit einer Hydroxy- oder einer $C_1$-$C_4$-Hydroxyalkylfunktion, $C_2$-$C_8$-Alkenyl, $C_1$-$C_8$-Alkoxy, -Acyl, -Acyloxy oder $C_6$-$C_{12}$-Aryl oder -Arylalkyl ist,
$R^9$ bis $R^{13}$ jeweils die gleichen Gruppen wie $R^8$ und auch - O-$R^8$ sind,
m und n jeweils unabhängig 1, 2, 3 oder 4 sind,
X eine Säure ist, die Addukte mit Triazinverbindungen (III) bilden kann;
oder oligomere Ester von Tris(hydroxyethyl)isocyanurat mit aromatischen Polycarbonsäuren,

e) Aluminiumphosphite.

**6.** Verwendung nach Anspruch 5, wobei

die Kondensationsprodukte a) von Melamin Melem, Melam, Melon und/oder höher kondensierte Verbindungen davon sind;
die Reaktionsprodukte von Melamin b) Dimelaminpyrophosphat, Melaminpolyphosphat, Melempolyphosphat, Melampolyphosphat, Melonpolyphosphat und/oder gemischte Polysalze dieses Typs sind;
die Phosphate c) Ammoniumhydrogenphosphat, Ammoniumdihydrogenphosphat und/oder Ammoniumpolyphosphat sind;
die N-Synergisten d) Benzoguanamin, Tris(hydroxyethyl)isocyanurat, Allantoin, Glycouril, Melamin, Melamincyanurat, Dicyandiamid und/oder Guanidin sind;
die Aluminiumphosphite e) von Formel (IX), (II) und/oder (X) sind

$$Al_2(HPO_3)_3 \times (H_2O)_q \qquad (IX)$$

wobei
q 0 bis 4 ist

$$Al_{2,00}M_z(HPO_3)_y(OH)_v \times (H_2O)_w \qquad (II)$$

wobei
M Alkalimetallionen sind
z 0,01 bis 1,5
y 2,63 bis 3,5
v 0 bis 2 und
w 0 bis 4,

$$Al_{2,00}(HPO_3)_u(H_2PO_3)_t \times (H_2O)_s \qquad (X)$$

wobei
u 2 bis 2,99 ist
t 2 bis 0,01 und
s 0 bis 4
und/oder Gemische von Aluminiumphosphit der Formel (IX) mit Aluminiumsalz mit begrenzter Löslichkeit und stickstofffreien Ionen, Gemische von Aluminiumphosphit der Formel (X) mit Aluminiumsalzen, Aluminiumpho-

sphit [Al(H2PO$_3$)$_3$], sekundärem Aluminiumphosphit [$Al_2(HPO_3)_3$], basischem Aluminiumphosphit [Al(OH)($H_2PO_3$)$_2$*2aq], Aluminiumphosphittetrahydrat [$Al_2(HPO_3)_3$*4aq], Aluminiumphosphonat, $Al_7(HPO_3)_9(OH)_6$ (1,6-Hexandiamin)$_{1,5}$*12$H_2O$, $Al_2(HPO_3)_3$*x$Al_2O_3$*n$H_2O$ mit x = 2,27 -1, $Al_4H_6P_{16}O_{18}$ und/oder Gemischen von 0-99, 9 Gew.-% $Al_2(HPO_3)_3$*n$H_2O$ mit 0,1-100 Gew.-% Natriumaluminiumphosphit.

**7.** Verwendung nach einem oder mehreren der Ansprüche 5 bis 6, wobei der Aluminiumphosphit ein Gemisch von 50-99 Gew.-% $Al_2(HPO_3)_3$ x $(H_2O)_q$, wobei q 0 bis 4 ist, mit 1-50 Gew.-% Natriumaluminiumphosphit ist.

**8.** Verwendung nach einem oder mehreren der Ansprüche 5 bis 6, wobei der Aluminiumphosphit ein Gemisch aus 50-99 Gew.-% $Al_2(HPO_3)_3$ x $(H_2O)_q$, wobei q 0 bis 4 ist, mit 1-50 Gew.-% $Al_{2,00}M_z(HPO_3)_y(OH)_v$ x $(H_2O)_w$ (II) ist, wobei M Natrium ist, z 0,005 bis 0,15 ist, y 2,8 bis 3,1 ist, v 0 bis 0,4 ist und w 0 bis 4 ist.

**9.** Verwendung nach einem oder mehreren der Ansprüche 1 bis 6, wobei Komponente B Melaminpolyphosphat ist.

**10.** Verwendung nach einem oder mehreren der Ansprüche 1 bis 9, wobei Komponente C ausgewählt ist aus Magnesiumoxid, Zinkoxid, Manganoxid, Zinnoxid, Magnesiumhydroxid, Hydrotalcit, Hydrocalumit, Dihydrotalcit, Calciumhydroxid, Zinkhydroxid, Zinnoxidhydrat, Manganhydroxid, Magnesiumcarbonat, Magnesiumcalciumcarbonat (Dolomit); Zinkstannat, Zinkhydroxylstannat, Zinkphosphat, Zinksulfid, Aluminiumoxid, Aluminiumhydroxid, Böhmit, Aluminiumsulfathydroxid, Aluminiumphosphat, Calciumoxid, basischem Zinksilikat und Zinkborat.

**11.** Verwendung nach Anspruch 1, wobei Komponente C ausgewählt ist aus Calciumoxid, Manganoxid, Zinnoxid, Zinnoxidhydrat, Manganhydroxid, basischem Zinksilikat, Zinkborat, Zinkstannat, Magnesiumhydroxid, Zinkoxid, Dihydrotalcit und Böhmit.

**12.** Verwendung nach Anspruch 1, wobei Komponente C ausgewählt ist aus Magnesiumoxid, Zinkoxid, Manganoxid, Zinnoxid, Dihydrotalcit, Hydrocalumit, Magnesiumhydroxid, Calciumhydroxid, Zinkhydroxid, Zinnoxidhydrat, Manganhydroxid, Zinkborat, basischem Zinksilikat, Zinkstannat und Gemischen dieser Stoffe, wobei die Summe der Komponenten immer 100 Gew.-% beträgt.

**13.** Verwendung nach einem oder mehreren der Ansprüche 1 bis 12, wobei von 50 bis 99 Gew.-% an Komponente A, von 0 bis 50 Gew.-% an Komponente B und von 1 bis 20 Gew.-% an Komponente C vorhanden sind.

**14.** Verwendung nach einem oder mehreren der Ansprüche 1 bis 13, wobei von 50 bis 78 Gew.-% an Komponente A, von 20 bis 50 Gew.-% an Komponente B und von 2 bis 20 Gew.-% an Komponente C vorhanden sind.

**15.** Verwendung nach einem oder mehreren der Ansprüche 1 bis 14, wobei von 60 bis 98 Gew.-% an Komponente A und von 2 bis 40 Gew.-% an Komponente C vorhanden sind.

**16.** Flammschutzmittel-Stabilisator-Kombination nach einem oder mehreren der Ansprüche 1 bis 15, **dadurch gekennzeichnet, dass** der Restfeuchtegehalt der Flammschutzmittel-Stabilisator-Kombination zwischen 0,01 Gew.-% und 10 Gew.-%, vorzugsweise zwischen 0,1 Gew.-% und 1 Gew.-%, beträgt.

**17.** Flammschutzmittel-Stabilisator-Kombination nach einem oder mehreren der Ansprüche 1 bis 16, wobei die Schüttdichte der Flammschutzmittel-Stabilisator-Kombination zwischen 100 g/l und 1000 g/l beträgt.

**18.** Flammschutzmittel-Stabilisator-Kombination nach einem oder mehreren der Ansprüche 1 bis 17, wobei die Klopfdichte der Flammschutzmittel-Stabilisator-Kombination zwischen 200 g/l und 1200 g/l beträgt.

## Revendications

**1.** Utilisation d'un composant C choisi dans le groupe d'un oxyde métallique, un oxyde basique ou amphotère, un hydroxyde métallique, un silicate, une zéolithe, un acide silicique, une poudre de verre, de vitrocéramique ou de céramique, du carbonate de magnésium, du carbonate de magnésium et de calcium (dolomite) ; du stannate de zinc, de l'hydroxystannate de zinc, du phosphate de zinc, du sulfure de zinc, du borate de zinc ou du phosphate d'aluminium pour la préparation d'une combinaison agent ignifugeant-stabilisant pour polymères thermoplastiques, comprenant, comme composant A, de 25 à 99,9 % en poids d'un sel d'acide phosphinique de formule (I)

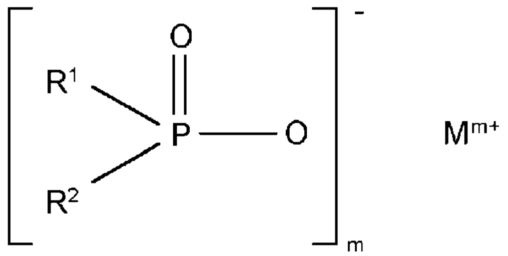

(I)

dans laquelle

$R^1$, $R^2$ sont identiques ou différents et sont chacun alkyle en $C_1$-$C_{18}$ linéaire ou ramifié, aryle en $C_6$-$C_{18}$, arylalkyle en $C_7$-$C_{18}$ ou alkylaryle en $C_7$-$C_{18}$, ou $R^1$ et $R^2$ forment un ou plusieurs cycles l'un avec l'autre,
M est Mg, Ca, Al, Sb, Sn, Ge, Ti, Zn, Fe, Zr, Ce, Bi, Sr, Mn, Li, Na, K et/ou une base azotée protonée ;
m est de 1 à 4 ;
en tant que composant B, de 0 à 75 % en poids d'un synergiste ou d'un agent ignifugeant au phosphore/à l'azote et,
de 0,1 à 50 % en poids dudit composant C, la somme des composants étant toujours de 100 % en poids,
dans laquelle l'angle de repos de ladite combinaison agent ignifugeant-stabilisant est compris entre 5° et 45° tel que mesuré en versant en continu un échantillon de poudre à travers une chute jusqu'à une plaque ronde avec un rayon de r, en accumulant la poudre en une pile en forme de cône grandissant jusqu'à ce que la hauteur de la pile n'augmente pas, en mesurant la hauteur de la pile, h et en calculant l'angle de repos, $\alpha$, était selon la formule $tg\,\alpha = h/r$, et dans laquelle l'angle de repos de la combinaison agent ignifugeant-stabilisant comprenant le composant C) a une valeur numérique diminuée par rapport à l'angle de repos d'une combinaison agent ignifugeant-stabilisant comprenant les mêmes composants A et B mais sans composant C).

2. Utilisation selon la revendication 1, dans laquelle l'angle de repos de ladite combinaison agent ignifugeant-stabilisant est compris entre 20° et 40°.

3. Utilisation selon la revendication 1 ou 2, dans laquelle $R^1$, $R^2$ sont identiques ou différents et sont chacun méthyle, éthyle, n-propyle, isopropyle, n-butyle, tert-butyle, n-pentyle, 2-pentyle, 3-pentyle, 2-méthylbutyle, 3-méthylbutyle (iso-mentyle), 3-méthylbut-2-yle, 2-méthylbut-2-yle, 2,2-diméthylpropyle (néopentyle), hexyle, heptyle, octyle, nonyle, décyle, cyclopentyle, cyclopentyléthyle, cyclohexyle, cyclohexyléthyle, phényle, phényléthyle, méthylphényle et/ou méthylphényléthyle.

4. Utilisation selon une ou plusieurs des revendications 1 à 3, dans laquelle M est un ion calcium, aluminium, zinc, titane ou fer.

5. Utilisation selon une ou plusieurs des revendications 1 à 4, dans laquelle le composant B comprend un ou plusieurs des groupes a) à e)

a) produits de condensation de la mélamine,
b) produits de réaction de mélamine avec l'acide polyphosphorique et/ou produits de réaction des produits de condensation de mélamine avec l'acide polyphosphorique ou des mélanges correspondants,
c) phosphates des formules $(NH_4)_y H_{3-y} PO_4$ ou $(NH_4 PO_3)_z$, où y va de 1 à 3 et z va de 1 à 10 000,
d) N-synergistes des formules (III) à (VIII) ou des mélanges correspondants,

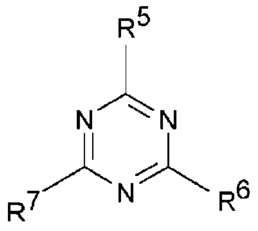

(III)

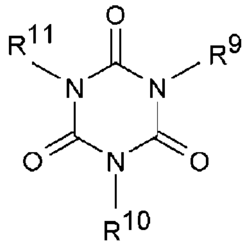

(IV)

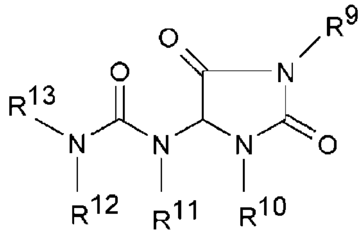

(V)

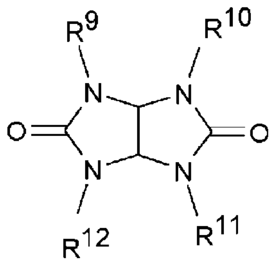

(VI)

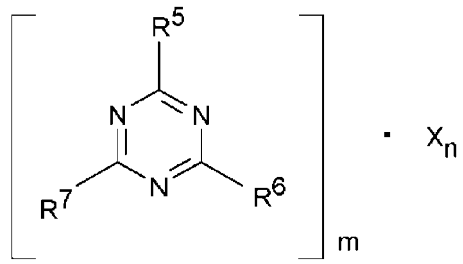

(VII)

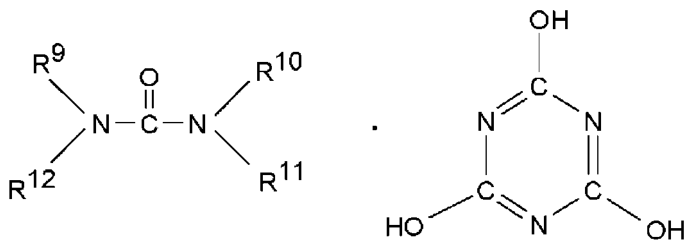

(VIII)

où

$R^5$ à $R^7$ sont chacun hydrogène, alkyle en $C_1$-$C_8$, cycloalkyle ou alkylcycloalkyle en $C_5$-$C_{16}$, éventuellement substitué par un hydroxyle ou une fonction $C_1$-$C_4$-hydroxyalkyle, $C_2$-$C_8$-alcényle, $C_1$-$C_8$-alcoxy, -acyle, -acyloxy, $C_6$-$C_{12}$-aryle ou -arylalkyle, -$OR^8$ et -$N(R^8)R^9$, N-alicyclique ou N-aromatique,
$R^8$ est hydrogène, alkyle en $C_1$-$C_8$, cycloalkyle ou alkylcycloalkyle en $C_5$-$C_{16}$, éventuellement substitué par un hydroxyle ou une fonction $C_1$-$C_4$-hydroxyalkyle, $C_2$-$C_8$-alcényle, $C_1$-$C_8$-alcoxy, -acyle, -acyloxy ou $C_6$-$C_{12}$-aryle ou -arylalkyle,
$R^9$ à $R^{13}$ sont chacun les mêmes groupes que $R^8$ et aussi - O-$R^8$,
m et n sont chacun indépendamment de 1, 2, 3 ou 4,
X est un acide qui peut former des adduits avec des composés triazine (III) ;
ou des esters oligomériques de tris(hydroxyéthyl)isocyanurate avec des acides polycarboxyliques aromatiques,

e) phosphites d'aluminium.

**6.** Utilisation selon la revendication 5, dans laquelle les produits de condensation a) de la mélamine sont le mélem, le mélam, le melon et/ou des composés plus hautement condensés correspondants ;

les produits de réaction de la mélamine b) sont le pyrophosphate de dimélamine, le polyphosphate de mélamine, le polyphosphate de mélem, le polyphosphate de mélam, le polyphosphate de melon et/ou les polysels mixtes de ce type ;
les phosphates c) sont l'hydrogénophosphate d'ammonium, le dihydrogénophosphate d'ammonium et/ou le polyphosphate d'ammonium ;
les N-synergistes d) sont la benzoguanamine, l'isocyanurate de tris(hydroxyéthyle), l'allantoïne, le glycouril, la

mélamine, le cyanurate de mélamine, le dicyandiamide et/ou la guanidine ;
les phosphites d'aluminium e) sont de formule (IX), (II) et/ou (X)

$$Al_2(HPO_3)_3 \text{ x } (H_2O)_q \qquad (IX)$$

où
q est 0 à 4

$$Al_{2,00}M_z(HPO_3)_y(OH)_v \text{ x } (H_2O)_w \qquad (II)$$

où
M sont des ions de métaux alcalins
z 0,01 à 1,5
y 2,63 à 3,5
v 0 à 2 et
w 0 à 4,

$$Al_{2,00}(HPO_3)_u(H_2PO_3)_t \text{ x } (H_2O)_s \qquad (X)$$

où
u est 2 à 2,99
t 2 à 0,01 et
s 0 à 4
et/ou des mélanges de phosphite d'aluminium de formule (IX) avec un sel d'aluminium à solubilité limitée et des ions exempts d'azote, des mélanges de phosphite d'aluminium de formule (X) avec des sels d'aluminium, phosphite d'aluminium [Al(H2PO$_3$)$_3$], phosphite d'aluminium secondaire [$Al_2(HPO_3)_3$], phosphite d'aluminium basique [$Al(OH)(H_2PO_3)_2$*2aq], tétrahydrate de phosphite d'aluminium [$Al_2(HPO_3)_3$*4aq], phosphonate d'aluminium, $Al_7(HPO_3)_9(OH)_6$(1,6-hexanediamine)$_{1,5}$*12$H_2O$,
$Al_2(HPO_3)_3$*x$Al_2O_3$*n$H_2O$ avec x = 2,27 -1, $Al_4H_6P_{16}O_{18}$ et/ou des mélanges de 0 à 99,9 % en poids de $Al_2(HPO_3)_3$*n$H_2O$ avec 0,1 à 100 % en poids de phosphite de sodium et d'aluminium.

**7.** Utilisation selon une ou plusieurs des revendications 5 à 6, dans laquelle le phosphite d'aluminium est un mélange de 50 à 99 % en poids de $Al_2(HPO_3)_3$ x $(H_2O)_q$ où q est 0 à 4 avec 1 à 50 % en poids de phosphite d'aluminium et de sodium.

**8.** Utilisation selon une ou plusieurs des revendications 5 à 6, dans laquelle le phosphite d'aluminium est un mélange de 50 à 99 % en poids de $Al_2(HPO_3)_3$ x $(H_2O)_q$ où q est 0 à 4 avec 1 à 50 % en poids de $Al_{2,00}M_z(HPO_3)_y(OH)_v$ x $(H_2O)_w$ (II) où M est sodium, z est 0,005 à 0,15, y est 2,8 à 3,1, v est 0 à 0,4 et w est 0 à 4.

**9.** Utilisation selon une ou plusieurs des revendications 1 à 6, dans laquelle le composant B est le polyphosphate de mélamine.

**10.** Utilisation selon une ou plusieurs des revendications 1 à 9, dans laquelle le composant C est choisi parmi l'oxyde de magnésium, l'oxyde de zinc, l'oxyde de manganèse, l'oxyde d'étain, l'hydroxyde de magnésium, l'hydrotalcite, l'hydrocalumite, la dihydrotalcite, l'hydroxyde de calcium, l'hydroxyde de zinc, l'oxyde d'étain hydraté, l'hydroxyde de manganèse, le carbonate de magnésium, le carbonate de magnésium-calcium (dolomite) ; le stannate de zinc, l'hydroxystannate de zinc, le phosphate de zinc, le sulfure de zinc, l'oxyde d'aluminium, l'hydroxyde d'aluminium, la boehmite, l'hydroxyde de sulfate d'aluminium, le phosphate d'aluminium, l'oxyde de calcium, le silicate de zinc basique ou le borate de zinc.

**11.** Utilisation selon la revendication 1, dans laquelle le composant C est choisi parmi l'oxyde de calcium, l'oxyde de manganèse, l'oxyde d'étain, l'oxyde d'étain hydraté, l'hydroxyde de manganèse, le silicate de zinc basique, le borate de zinc, le stannate de zinc, l'hydroxyde de magnésium, l'oxyde de zinc, la dihydrotalcite ou la boehmite.

**12.** Utilisation selon la revendication 1, dans laquelle le composant C est choisi parmi l'oxyde de magnésium, l'oxyde de zinc, l'oxyde de manganèse, l'oxyde d'étain, la dihydrotalcite, l'hydrocalumite, l'hydroxyde de magnésium, l'hydroxyde de calcium, l'hydroxyde de zinc, l'oxyde d'étain hydraté, l'hydroxyde de manganèse, le borate de zinc, le silicate de zinc basique, le stannate de zinc ou des mélanges de ces substances, la somme des composants étant toujours de

100 % en poids.

**13.** Utilisation selon une ou plusieurs des revendications 1 à 12, dans laquelle de 50 à 99 % en poids du composant A, de 0 à 50 % en poids du composant B et de 1 à 20 % en poids du composant C sont présents.

**14.** Utilisation selon une ou plusieurs des revendications 1 à 13, dans laquelle de 50 à 78 % en poids du composant A, de 20 à 50 % en poids du composant B et de 2 à 20 % en poids du composant C sont présents.

**15.** Utilisation selon une ou plusieurs des revendications 1 à 14, dans laquelle de 60 à 98 % en poids du composant A et de 2 à 40 % en poids du composant C sont présents.

**16.** Combinaison agent ignifugeant-stabilisant selon une ou plusieurs des revendications 1 à 15, **caractérisée en ce que** la teneur en humidité résiduelle de ladite combinaison agent ignifugeant-stabilisant est comprise entre 0,01 % en poids et 10 % en poids, et de préférence entre 0,1 % en poids et 1 % en poids.

**17.** Combinaison agent ignifugeant-stabilisant selon une ou plusieurs des revendications 1 à 16, **caractérisée en ce que** la densité apparente de ladite combinaison agent ignifugeant-stabilisant est comprise entre 100 g/l et 1 000 g/l.

**18.** Combinaison agent ignifugeant-stabilisant selon une ou plusieurs des revendications 1 à 17, **caractérisée en ce que** la densité tassée de ladite combinaison agent ignifugeant-stabilisant comprise entre 200 g/l et 1 200 g/l.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 2252258 A
- DE 2447727 A
- EP 9701664 W
- DE 19734437 A
- DE 19737727 A
- DE 19614424 A
- DE 19933901 A
- WO 2004022640 A
- CN 104059101A A
- US 2006089435 A1
- US 2006084734 A1
- US 2008161490 A1
- US 2014066551 A1
- US 2004227130 A1
- WO 9739053 A
- WO 9616948 A
- WO 1998039306 A
- DE 19920276 A
- DE 102014001222 A1
- CN 104059101 A